# FASCICULE DE BREVET EUROPEEN

(11) **EP 3 803 216 B1**
(45) Date de publication et mention de la délivrance du brevet: **08.11.2023**
(21) Numéro de dépôt: 19737182.6
(22) Date de dépôt: 29.05.2019
(51) Int. Cl.: F24D 3/18, A01K 1/015

(54) **SYSTEME POUR LA PRODUCTION D'EAU CHAUDE DANS UNE ENCEINTE D'ELEVAGE DES ANIMAUX**
SYSTEM ZUR ERZEUGUNG VON HEISSWASSER IN EINEM VIEHGEHEGE
SYSTEM FOR PRODUCING HOT WATER IN A LIVESTOCK ENCLOSURE

(30) Priorité: 01.06.2018 FR 1854784
(43) Date de publication de la demande: 14.04.2021
(73) Titulaire: Bioret Agri-Logette Confort, 44390 Nort sur Erdre (FR)
(72) Inventeur: BIORET, Jean-Vincent, 44390 PETIT MARS (FR)
(74) Mandataire: Jacobacci Coralis Harle
(86) Numéro de dépôt international: PCT/FR2019/051281
(87) Numéro de publication internationale: WO 2019/229393

(56) Documents cités:
- EP-A1- 3 111 757
- FR-A1- 3 056 880
- US-A1- 2014 374 056

## Description

### DOMAINE TECHNIQUE AUQUEL SE RAPPORTE L'INVENTION

La présente invention concerne, de manière générale, le domaine des systèmes pour la production d'eau chaude. Elle concerne plus particulièrement les systèmes pour la production d'eau chaude, conçus pour équiper les enceintes d'élevage des animaux.

### ARRIERE-PLAN TECHNOLOGIQUE

Les élevages d'animaux ont généralement un besoin important en eau chaude.

Par exemple, dans les élevages laitiers (vache, chèvre, brebis), l'eau chaude est nécessaire pour le nettoyage de la machine à traire, des tanks à lait ou encore de la salle de traite.

Or, cette production d'eau chaude peut représenter une part importante des consommations énergétiques au sein d'un élevage.

C'est tout particulièrement le cas lorsque cette eau chaude est produite au moyen d'un simple chauffe-eau électrique.

Pour réduire significativement ce poste de consommation énergétique, les exploitations agricoles peuvent maintenant être équipées d'un chauffe-eau dit « thermodynamique » comprenant :
- un ballon de stockage d'eau chaude, et
- une pompe à chaleur air-eau, destinée à chauffer l'eau stockée dans ce ballon.

La pompe à chaleur air-eau est connectée à deux circuits :
- un circuit de captage, pour capter l'énergie thermique présente dans l'air environnant, et
- un circuit de chauffage, pour restituer l'énergie thermique, raccordé au ballon et destiné à chauffer l'eau contenue dans le ballon.

Mais, en pratique, le coefficient de performance (ou COP) « réel » d'un tel système est généralement inférieur à sa valeur « théorique ».

Cette différence s'explique principalement par les variations de la température du milieu à basse température (source froide), dont la valeur est souvent trop faible.

Il existe ainsi un besoin d'un système de production d'eau chaude pour enceinte d'élevage, dont les performances énergétiques du chauffe-eau thermodynamique (notamment le COP seraient optimisées, voire améliorées.

Le document FR 3056880 A1 décrit un système pour le confort thermique des animaux dans une enceinte d'élevage. Ce système comprend au moins un matelas de confort qui comprend au moins une couche élastomère comportant plusieurs cavités étanches destinées à contenir un fluide caloporteur, un circuit fluidique caloporteur, destiné à contenir ledit fluide caloporteur, un circuit fluidique d'abreuvement, et des moyens échangeurs thermiques qui sont implantés entre ledit circuit fluidique caloporteur et ledit circuit fluidique d'abreuvement, pour assurer des échanges thermiques entre ledit fluide caloporteur et l'eau d'abreuvement. Le circuit fluidique peut être équipé d'une pompe à chaleur réversible pour réguler la température du fluide caloporteur.

### OBJET DE L'INVENTION

Afin de remédier à l'inconvénient précité de l'état de la technique, la présente invention propose un système pour la production d'eau chaude dans une enceinte d'élevage des animaux selon la revendication 1.

Le système comprend un chauffe-eau thermodynamique comprenant une pompe à chaleur destinée à chauffer l'eau.

Et, selon l'invention, ladite pompe à chaleur consiste en une pompe à chaleur eau-eau qui est connectée à au moins un circuit captage, pour capter l'énergie thermique et dans lequel circule un fluide caloporteur.

Ledit au moins un circuit de captage comprend :
(a) au moins un matelas de confort qui comprend au moins une couche élastomère et qui comporte deux faces opposées :
   - une face supérieure, apte à subir une déformation élastique et comportant au moins une zone d'accueil sur laquelle un animal est destiné à prendre appui, et
   - une face inférieure, destinée à reposer sur une surface de réception,
      lequel au moins un matelas de confort comporte plusieurs cavités étanches destinées à contenir ledit fluide caloporteur,
      lesquelles cavités étanches sont sous-jacentes d'au moins une partie de ladite au moins une zone d'accueil,
(b) des moyens circulateurs, pour générer une circulation dudit fluide caloporteur au sein dudit circuit de captage, y compris au travers dudit au moins un matelas de confort.

Un tel système a pour avantage de capter l'énergie thermique de l'enceinte d'élevage (et en particulier l'énergie thermique produite par les animaux), pour chauffer l'eau.

Ce système présente des performances énergétiques particulièrement intéressantes (notamment au niveau du COP mesuré sur le chauffe-eau thermodynamique).

Par exemple, dans une enceinte recevant 100 vaches avec une température ambiante de 20°C et une humidité ambiante de 50%, le COP est de 2,5 et permet la production d'environ 9 m³ d'eau chaude à 65°C par jour.

Le système a également pour intérêt de participer au confort thermique des animaux en été, du fait du refroidissement du fluide caloporteur par son passage au travers de la pompe à chaleur eau-eau.

Le système est encore intéressant pour la régularité et le contrôle de l'énergie thermique collectée par le biais dudit au moins un circuit captage, qui est notamment stable quel que soient les conditions environnantes (notamment la température ambiante).

En pratique, le fluide caloporteur circulant dans les matelas de confort assure le captage de l'énergie thermique. Cette énergie thermique captée est transmise jusqu'à l'eau à chauffer par le biais de la pompe à chaleur.

Inversement, le fluide caloporteur est refroidi par son passage au travers de cette même pompe à chaleur ; les matelas de confort sont alors également refroidis en surface par le fluide caloporteur, de sorte à rafraichir l'animal en présence et ainsi à limiter l'augmentation de la température corporelle de ce dernier.

D'autres caractéristiques non limitatives et avantageuses du système conforme à l'invention, prises individuellement ou selon toutes les combinaisons techniquement possibles, sont les suivantes :
- ledit au moins un circuit de captage comporte au moins deux circuits de captage : un circuit de captage primaire dans lequel circule un fluide caloporteur primaire, coopérant avec la pompe à chaleur eau-eau, et un circuit de captage secondaire dans lequel circule un fluide caloporteur secondaire, comprenant ledit au moins un matelas de confort et lesdits moyens circulateurs, lequel circuit de captage primaire et lequel circuit de captage secondaire coopèrent par l'intermédiaire de moyens échangeurs thermiques passifs eau-eau, de sorte à assurer des échanges thermiques entre ledit fluide caloporteur primaire et ledit fluide de caloporteur secondaire ; dans ce cas, de préférence, le système comprend : au moins un circuit de captage primaire comportant, en parallèle, au moins deux circuits de captage secondaires, ou au moins deux circuits de captage primaire parallèles, comportant chacun au moins un circuit de captage secondaire ;
- le système comprend des moyens pour le pilotage des moyens circulateurs équipant ledit au moins un circuit de captage, de manière à réguler la circulation du fluide de caloporteur dans ledit au moins un circuit de captage ;
- les moyens échangeurs thermiques passifs eau-eau comprennent deux circuits fluidiques internes distincts : un premier circuit fluidique interne, pour son raccordement à un premier circuit de captage parmi le circuit de captage primaire ou le circuit de captage secondaire, et un second circuit fluidique interne, pour son raccordement à l'autre circuit de captage parmi, respectivement, le circuit de captage secondaire et le circuit de captage primaire ; de préférence, les moyens échangeurs thermiques passifs eau-eau comprennent un corps creux définissant une chambre contenant deux circuits fluidiques internes distincts : le premier circuit fluidique interne, comportant une tubulure implantée dans ladite chambre et munie de deux orifices débouchant hors dudit corps creux pour son raccordement au circuit de captage primaire ou au circuit de captage secondaire, et le second circuit fluidique interne, formé par ladite chambre qui est munie de deux conduits munis chacun d'un orifice débouchant hors dudit corps creux pour le raccordement de l'autre circuit de captage, et d'un orifice débouchant dans ladite chambre pour permettre une circulation fluidique dans ladite chambre entre lesdits conduits ; selon une autre caractéristique, le premier circuit fluidique interne des moyens échangeurs thermiques passifs eau-eau est raccordé au circuit de captage secondaire, et le second circuit fluidique interne des moyens échangeurs thermiques passifs eau-eau est raccordé au circuit de captage primaire ;
- les cavités étanches dudit au moins un matelas de confort s'étendent parallèlement, ou au moins approximativement parallèlement, les unes par rapport aux autres, et lesdites cavités étanches ont chacune une forme allongée rectiligne ; ledit au moins un matelas de confort comporte avantageusement deux bords longitudinaux, et lesdites cavités étanches s'étendent parallèlement, ou au moins approximativement parallèlement, auxdits bords longitudinaux ;
- ledit au moins un matelas de confort comporte au moins une chambre étanche, destinée à contenir un fluide amortisseur et ménagée entre lesdites cavités étanches et ladite face supérieure dudit matelas, lequel au moins un matelas de confort comporte au moins un orifice débouchant pour l'accès à ladite au moins une chambre étanche ;
- ledit au moins un matelas de confort est réalisé monobloc, lequel au moins un matelas de confort définit directement lesdites cavités étanches et le cas échéant ladite au moins une chambre étanche ;
- ledit chauffe-eau thermodynamique comprend un ballon de stockage d'eau chaude, couplé à la pompe à chaleur ; lequel ballon comporte avantageusement une entrée d'eau froide et une sortie d'eau chaude ; le ballon de stockage d'eau chaude comporte avantageusement une sortie d'eau chaude qui est connectée à des moyens de nettoyage eau chaude de l'enceinte d'élevage.

La présente invention concerne encore une enceinte d'élevage équipée d'un système selon l'invention, dans laquelle ledit chauffe-eau thermodynamique est avantageusement implanté dans un local technique.

L'enceinte d'élevage comprend avantageusement des logettes. Ledit au moins un matelas de confort recouvre le sol de l'une au moins desdites logettes, et ledit au moins un matelas de confort comporte une pluralité de cavités étanches qui s'étendent au sein de l'une au moins desdites logettes.

De préférence, l'enceinte d'élevage comprend au moins deux travées de logettes, et ladite enceinte comporte au moins deux circuits de captage secondaire équipant chacun au moins une travée de logettes.

L'enceinte d'élevage comprend avantageusement des moyens de nettoyage eau chaude (ou plus généralement un circuit d'eau chaude) ; et ledit chauffe-eau thermodynamique comprend un ballon de stockage d'eau chaude, lequel ballon de stockage d'eau chaude comporte une sortie d'eau chaude qui est connectée auxdits moyens de nettoyage eau chaude (ou plus généralement au circuit d'eau chaude de l'enceinte d'élevage).

La présente invention concerne aussi le procédé pour la production d'eau chaude dans une enceinte d'élevage des animaux selon l'invention.

Ce procédé comprend notamment les opérations suivantes :
- une circulation du fluide caloporteur primaire dans le circuit de captage primaire à une première valeur de pression (avec par exemple une pression de 2 à 5 bar),
- une circulation du fluide caloporteur secondaire dans le circuit de captage secondaire à une seconde valeur de pression, inférieure à ladite première valeur de pression (avec par exemple une pression de l'ordre de 600 mbar).

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une représentation schématique des principaux composants du système selon l'invention pour la production d'eau chaude dans une enceinte d'élevage des animaux ;
- la figure 2 représente, schématiquement et vue de dessus, un premier mode de réalisation d'une enceinte d'élevage équipée du système selon l'invention, dans lequel ce système comprend plusieurs circuits de captage secondaires montés en série sur un même circuit de captage primaire ;
- la figure 3 représente, schématiquement et vue de dessus, un second mode de réalisation d'une enceinte d'élevage équipée du système selon l'invention, dans lequel ce système comprend plusieurs couples de circuits de captage primaire / secondaire parallèles.

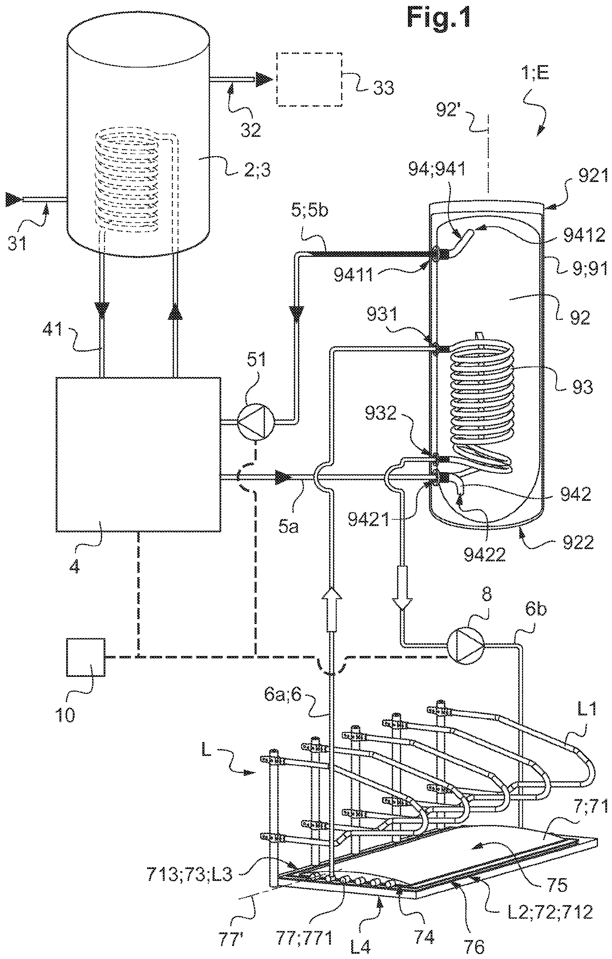

La figure 1 représente, schématiquement, un système 1 selon l'invention pour la production d'eau chaude dans une enceinte E dédiée à l'élevage des animaux.

De manière générale, ce système 1 selon l'invention comprend un chauffe-eau thermodynamique (CET) couplé à un matelas de confort dans lequel circule un fluide caloporteur, de manière à capter l'énergie thermique au sein de l'enceinte d'élevage E (et en particulier l'énergie thermique générée par les animaux) et à restituer cette énergie thermique pour la production d'eau chaude.

### Enceinte d'élevage et logettes

L'enceinte d'élevage E, illustrée schématiquement sur les figures 1 à 3, consiste avantageusement en une étable pour l'élevage de bovins, en particulier de bovins laitiers ou de bovins à viande.

Cette enceinte d'élevage E comporte avantageusement des stalles de couchage.

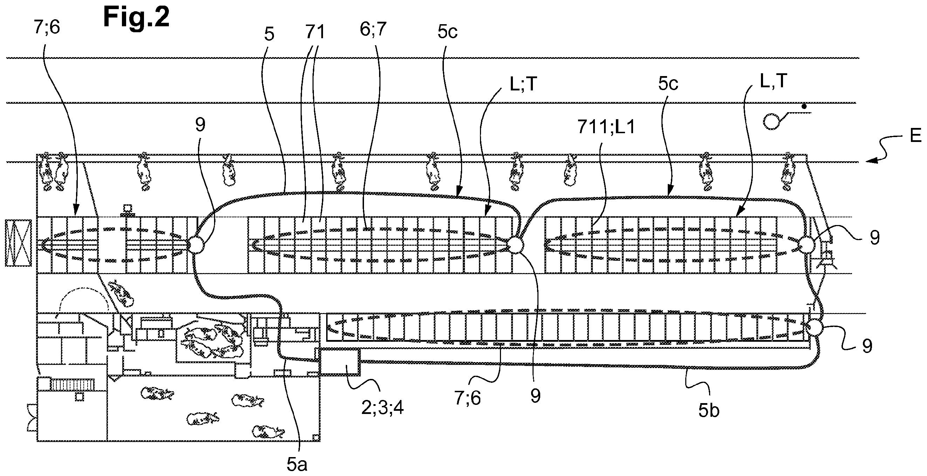

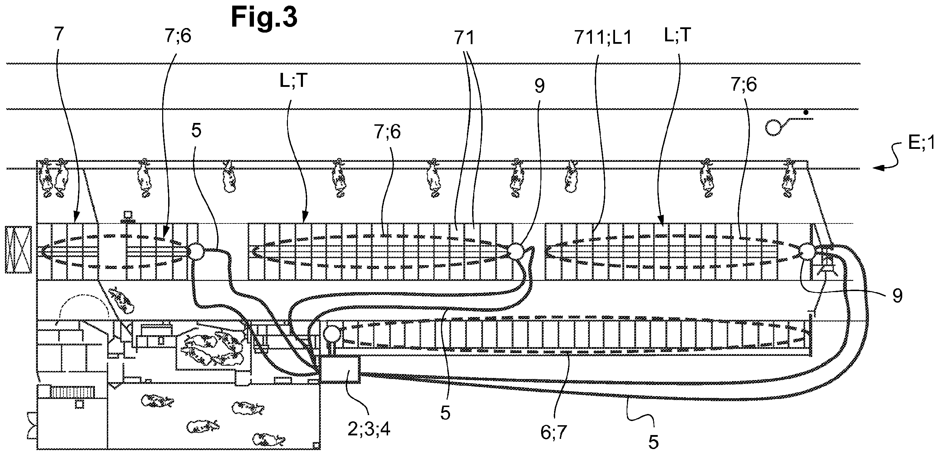

Les stalles de couchage consistent ici en des logettes L ménagées sur au moins une ligne. L'enceinte d'élevage E comprend généralement au moins deux travées T (ou rangées) de logettes L (figures 2 et 3).

Les logettes L constituent un compromis entre un couchage confortable pour le bovin, le respect du mouvement levé/couché, une station debout confortable et un minimum de souillures dans la logette.

Chaque logette L, de manière classique et tel que représenté schématiquement sur la figure 1, est délimitée par :
- deux séparations latérales L1, par exemple des structures tubulaires,
- un seuil arrière de logette L2, s'étendant le long d'un couloir d'accès,
- une limite avant L3, comprenant avantageusement une barre haute au garrot et un arrêtoir inférieur (ou limiteur d'avancement), formant le fond de la logette L, et
- un sol L4, par exemple, une dalle de béton.

### Système pour la production d'eau chaude

Le système 1 comprend un chauffe-eau thermodynamique 2, avantageusement implanté dans un local technique de l'enceinte E.

Le chauffe-eau thermodynamique 2 comprend ici deux principaux composants (figure 1):
- un ballon 3 pour le stockage d'eau chaude, et
- une pompe à chaleur eau-eau 4 (dite encore « pompe à chaleur 4 »), destinée à collecter l'énergie thermique au sein de l'enceinte E et à chauffer l'eau (avantageusement l'eau stockée dans le ballon 3).

Par « ballon 3 », on entend avantageusement un réservoir ou une cuve destiné(e) à contenir de l'eau chaude, isolé(e) thermiquement.

Le ballon 3 comporte notamment deux raccordements :
- une entrée d'eau « froide » 31, par exemple raccordée au réseau d'eau de l'enceinte d'élevage E, et
- une sortie d'eau « chaude » 32, qui est avantageusement connectée à un circuit d'eau chaude 33 de l'enceinte d'élevage E, de préférence les moyens de nettoyage eau chaude 33 de l'enceinte d'élevage E.

Par « pompe à chaleur 4 », on entend avantageusement un dispositif permettant de transférer de l'énergie thermique (calories) d'un milieu à basse température (source froide) vers un milieu à haute température (source chaude).

En l'espèce, la pompe à chaleur 4 est choisie parmi les pompes à chaleur eau-eau : l'énergie thermique est transférée d'un premier fluide caloporteur destiné à collecter l'énergie thermique, vers un second fluide caloporteur destiné à restituer l'énergie thermique pour chauffer l'eau (stockée ici dans le ballon 3).

Cette pompe à chaleur 4 comprend avantageusement un circuit fermé qui contient un fluide frigorigène et qui est équipé de quatre éléments principaux répartis en série (non représentés) :
- un condenseur (source chaude), libérant (directement ou indirectement) la chaleur du fluide frigorigène vers l'eau à chauffer (ici l'eau dans le ballon 3), en passant de l'état gazeux à l'état liquide,
- un réducteur de pression, destiné à réduire la pression du fluide frigorigène en phase liquide,
- un évaporateur (source froide), qui prélève la chaleur dans un fluide caloporteur issu de l'enceinte E de manière à vaporiser le fluide frigorigène, et
- un compresseur, actionné par un moteur électrique, qui élève la pression et la température du fluide frigorigène gazeux en le comprimant.

D'un côté, le raccordement entre la pompe à chaleur 4 et le ballon 3 peut prendre deux formes alternatives :
- montage « direct », de sorte que le condenseur circule directement au sein du ballon 3 pour chauffer l'eau, ou
- montage « indirect », de sorte qu'un circuit de chauffage 41 « eau chaude » (avec circulateur) est interposé entre le condenseur et le ballon 3, pour restituer l'énergie thermique produite par la pompe à chaleur 4 et chauffer l'eau contenue dans ce ballon 3.

Le circuit de chauffage « eau chaude » 41 comprend ainsi un ensemble de conduits formant un circuit fermé, pour la circulation d'un fluide caloporteur.

De manière complémentaire ou alternative, le circuit de chauffage « eau chaude » 41 pourrait par exemple être agencé pour former un circuit de chauffage dans un bâtiment (par exemple l'enceinte d'élevage ou un bâtiment attenant).

De l'autre côté, la pompe à chaleur 4, et en particulier son évaporateur, est connectée à au moins un circuit de captage 5, 6 dans lequel circule un fluide caloporteur.

Selon l'invention, ledit au moins un circuit de captage 5, 6 est ménagé au sein de l'enceinte E de sorte à capter l'énergie thermique au sein de cette enceinte E et en particulier l'énergie thermique émise par les animaux.

A cet effet, ledit au moins un circuit de captage 5, 6 comprend un ensemble de conduits comportant :
- au moins un matelas de confort 7 muni de cavités étanches dans lesquelles est destiné à cheminer un fluide caloporteur, et
- des moyens circulateurs 8, pour générer une circulation dudit fluide caloporteur au travers des cavités étanches équipant ledit au moins un matelas de confort 7.

### Matelas de confort

Le système 1 comprend ici avantageusement au moins un matelas de confort 7 continu qui recouvre le sol L4 des logettes L alignées.

Ce matelas de confort 7 comporte ainsi plusieurs zones d'accueil 71 qui sont juxtaposées sur la longueur dudit matelas de confort 7. De manière alternative, non représentée, chaque logette L peut contenir son propre matelas de confort 7 qui définit alors une zone d'accueil 71 unique.

Le matelas de confort 7 a une forme générale rectangulaire qui est délimitée par deux couples de bords (figure 1), à savoir :
- deux bords longitudinaux, à savoir un bord longitudinal arrière 72 destiné à s'étendre le long du seuil arrière L2 des logettes L équipées, et un bord longitudinal avant 73 destiné à s'étendre le long de la limite avant L3 de la ligne de logettes L, et
- deux bords transversaux 74, destinés à se situer au niveau des séparations latérales L1 des deux logettes L en bout de ligne.

Le matelas de confort 7 comporte encore deux faces opposées :
- une face supérieure 75, apte à subir une déformation élastique et formant les zones d'accueil 71 sur lesquelles les animaux sont destinés à prendre appui, et
- une face inférieure 76, destinée à reposer sur le sol L4 des logettes L.

Chacune des zones d'accueil 71 du matelas de confort 7 est destinée à accueillir ici un animal.

Chaque zone d'accueil 71 correspond ainsi à la surface au sol L4 d'une logette L, et est délimitée latéralement par deux séparations latérales L1,

Chacune des zones d'accueil 71 a alors une forme générale rectangulaire qui est délimitée par différentes bordures :
- deux bordures latérales 711, situées chacune à l'aplomb d'une séparation latérale L1 de logette L (très schématiquement sur les figures 2 et 3),
- une bordure arrière 712, attenante au seuil arrière L2 de la logette L (formant une partie du bord longitudinal arrière 72 du matelas de confort 7), et
- une bordure avant 713, attenante à la limite avant L3 de la logette L (formant une partie du bord longitudinal avant 73 du matelas de confort 7).

Par ailleurs, le matelas de confort 7 comporte au moins une couche élastomère.

Ce matelas de confort 7 peut être réalisé avantageusement monobloc dans ce matériau élastomère ; le matelas de confort 7 peut alors être également désigné sous le nom de « couche élastomère 7 ».

Cette couche élastomère est réalisée dans au moins un matériau apte à subir une déformation élastique, dit encore « matériau élastique », choisi parmi :
- les matériaux élastomères, à savoir par exemple le caoutchouc naturel, le caoutchouc « naturel synthétique » (ou poly-isoprène synthétique), le polybutadiène ou le styrène-butadiène, ou
- les matériaux plastiques ou élastomères thermoplastiques (TPE), à savoir par exemple le PVB (polyvinyle de butyral), ABS (acrylonitrile butadiène styrène) / SBR (styrène-butadiène), PP (polypropylène) / EPDM (éthylène-propylène-diène monomère), TPU (TPE de polyuréthane).

Cette couche élastomère est avantageusement réalisée monobloc, soit monomatériau (dans un seul matériau), soit multi-matériaux (avec au moins deux sous-couches superposées réalisées dans des matériaux différents).

La couche élastomère peut encore contenir des sous-couches de renfort choisies parmi les fibres textiles, les fibres de métal ou tout autre produit apportant la stabilité et/ou la résistance à l'élongation.

Ces sous-couches de renfort consistent par exemple en une armature textile servant de renfort, réalisée avantageusement en un matériau choisi parmi le nylon, le coton, le polyester, le polyamide ou tout autre textile de renfort.

Le matelas de confort 7 comporte encore plusieurs cavités étanches 77 destinées à contenir le fluide caloporteur. Ces cavités étanches 77 sont avantageusement ménagées dans ladite au moins une couche élastomère.

Les cavités étanches 77 sont juxtaposées et sont chacune sous-jacentes d'une partie des zones d'accueil 71 du matelas de confort 7. En d'autres termes, les zones d'accueil 71 du matelas de confort 7 sont sus-jacentes des cavités étanches 77 en présence.

Pour cela, les cavités étanches 77 consistent chacune en une structure tubulaire ayant une forme allongée rectiligne, définissant un axe longitudinal 77'.

Ces cavités étanches 77 sont ici au nombre de six. De manière générale, le nombre de cavités étanches 77 est avantageusement compris entre 4 et 10.

Les cavités étanches 77 sont réparties dans un plan P s'étendant parallèlement aux surfaces 75, 76 du matelas de confort 7.

Ces cavités étanches 77 (en particulier leurs axes longitudinaux respectifs 77') s'étendent ainsi parallèlement, ou au moins approximativement parallèlement, par rapport aux surfaces 75, 76 du matelas de confort 7.

Ces cavités étanches 77 (en particulier leurs axes longitudinaux 77' respectifs) s'étendent également parallèlement, ou au moins approximativement parallèlement, les unes par rapport aux autres et par rapport aux bords longitudinaux 72, 73 du matelas de confort 7.

Chaque cavité étanche 77 comporte ainsi une succession de tronçons s'étendant entre les bordures latérales 711 de chaque zone d'accueil 71, perpendiculairement à ces dernières.

Les cavités étanches 77 sont destinées chacune à contenir le fluide caloporteur qui est mis en circulation sur leurs longueurs respectives, pour capter de l'énergie thermique et aussi avantageusement pour réguler la température de la face supérieure 75 du matelas de confort 7.

Pour cela, chacune des cavités étanches 77 est terminée par deux orifices débouchants 771 qui sont ménagés chacun au niveau de l'un des bords transversaux 74 du matelas de confort 7.

Ces orifices débouchants 771 permettent un raccordement fluidique avec ledit au moins un circuit de captage 5, 6.

Les cavités étanches 77 sont ici indépendantes fluidiquement les unes par rapport aux autres. Dans ce cas, le perçage de l'une des cavités étanches 77 ne provoquerait pas la vidange de l'ensemble des cavités étanches du matelas de confort 7.

Chacune des cavités étanches 77 comporte donc deux orifices débouchants 771 qui lui sont propres, pour la circulation du fluide caloporteur.

Les orifices débouchants 771 s'ouvrent ici directement au niveau des bords transversaux 74 du matelas de confort 7.

Les orifices débouchants 771 sont avantageusement obtenus par une découpe à longueur de la couche élastomère, selon un trait de coupe orienté perpendiculairement aux bords longitudinaux 74.

En effet, la couche élastomère, avant sa pose, est avantageusement stockée sous forme d'un rouleau présentant une longueur de plusieurs mètres, en particulier supérieure à 3 mètres de long.

Cette forme de réalisation en rouleau a l'intérêt de permettre une pose simple et rapide du matelas de confort 7 dans l'enceinte d'élevage E, par le déroulement le long d'une ligne de logettes L puis par une découpe adaptée à la longueur souhaitée de cette ligne.

Par ailleurs, ladite au moins une couche élastomère comporte avantageusement au moins une chambre étanche, destinée à contenir un fluide amortisseur et ménagée entre lesdites cavités étanches 77 et ladite face supérieure 75 dudit matelas 7.

Ladite au moins une couche élastomère comporte au moins un orifice débouchant pour l'accès à ladite au moins une chambre étanche.

Ladite au moins une couche élastomère est avantageusement réalisée monobloc ; la couche élastomère définit directement lesdites cavités étanches 77 et le cas échéant ladite au moins une chambre étanche.

De manière générale, de tels matelas de confort sont par exemple décrits dans le document FR-15 59804 / WO-2017/064417.

### Circuits de captage primaire et secondaire

Selon les modes de réalisation illustrés sur les figures 1 à 3, ledit au moins un circuit de captage 5, 6 comprend avantageusement au moins deux circuits de captage 5, 6 en série qui coopèrent par l'intermédiaire de moyens échangeurs thermiques 9, à savoir :
- au moins un circuit de captage primaire 5 coopérant avec la pompe à chaleur 4 et en particulier son évaporateur, dans lequel circule un fluide caloporteur primaire, et
- au moins un circuit de captage secondaire 6 comprenant ledit au moins un matelas de confort 7 et lesdits moyens circulateurs 8, dans lequel circule un fluide caloporteur secondaire.

D'une part, le circuit de captage primaire 5 comporte un ensemble de conduits ou de canalisations, destinées à contenir le fluide caloporteur primaire et à assurer sa circulation entre la pompe à chaleur 4 et les moyens échangeurs thermiques 9.

Le fluide caloporteur primaire est avantageusement choisi parmi les liquides, par exemple l'eau ou un mélange eau/glycol.

Le circuit de captage primaire 5 consiste ici en un circuit fermé comportant deux parties séparées par les moyens échangeurs thermiques 9 et la pompe à chaleur 4 (figure 1) :
- une partie amont 5a, s'étendant depuis la pompe à chaleur 4 jusqu'aux moyens échangeurs thermiques 9, et
- une partie aval 5b, s'étendant depuis les moyens échangeurs thermiques 9 jusqu'à la pompe à chaleur 4.

Le circuit de captage primaire 5 comporte des moyens 51 pour générer la circulation de ce fluide caloporteur primaire, ici en boucle, dits encore « moyens de circulation ».

Par « moyens de circulation », on entend par exemple une pompe électrique du type pompe centrifuge.

Le circuit de captage primaire 5 peut comporter encore des moyens régulateurs de pression et/ou de moyens régulateurs de débit.

Ainsi, la pression au sein de ce circuit de captage primaire 5 est avantageusement réglée à une valeur de l'ordre de 2 à 5 bar.

D'autre part, le circuit de captage secondaire 6 comporte également un ensemble de conduits ou de canalisations associées aux matelas de confort 7, pour contenir le fluide caloporteur secondaire.

Ce circuit de captage secondaire 6 est prévu pour assurer la circulation du fluide caloporteur secondaire entre les moyens échangeurs thermiques 9 et les matelas de confort 7.

Le fluide caloporteur secondaire est avantageusement choisi également parmi les liquides, par exemple l'eau ou un mélange eau/glycol.

Le circuit de captage secondaire 6 consiste ici en un circuit fermé comportant deux parties séparées par le matelas de confort 7 et les moyens échangeurs thermiques 9 :
- une partie amont 6a, s'étendant depuis un matelas de confort 7 jusqu'aux moyens échangeurs thermiques 9, et
- une partie aval 6b, s'étendant depuis les moyens échangeurs thermiques 9 jusqu'au matelas de confort 7.

Le circuit de captage secondaire 6 comporte aussi les moyens 8 pour générer la circulation de ce fluide caloporteur secondaire, ici en boucle, dits encore « moyens de circulation ».

Par « moyens de circulation », on entend par exemple une pompe électrique du type pompe centrifuge.

En particulier, le circuit de captage secondaire 6 assure une répartition et une circulation parallèle du fluide caloporteur secondaire, le long des cavités étanches 77 du matelas de confort 7 associé.

Le circuit de captage secondaire 6 comprend pour cela :
- des moyens de raccordement fluidique amont, pour une alimentation en fluide, qui sont connectés en parallèle aux orifices débouchants 771 des cavités étanches 77 situés au niveau d'un premier bord transversal 74 du matelas de confort 7, et
- des moyens de raccordement fluidique aval, pour une collecte du fluide en sortie, qui sont connectés en parallèle aux orifices débouchants 771 des cavités étanches 77 situés au niveau d'un second bord transversal 74 du matelas de confort 7.

Les moyens de raccordement fluidique amont / aval comportent chacun par exemple un dispositif de type clarinette, afin d'assurer la circulation parallèle du fluide caloporteur au sein de chacune des cavités étanches 77.

La connexion d'une clarinette avec les orifices débouchants 771 attenants s'effectue avantageusement par le biais de moyens mécaniques d'étanchéité.

Les moyens de raccordement fluidique amont sont avantageusement équipés encore de moyens régulateurs de pression et/ou de moyens régulateurs de débit.

Ainsi, la pression au sein des cavités étanches 77, et plus généralement dans le circuit de captage secondaire 6, est ajustée par exemple à une pression de 200 mbar à 1 bar (par exemple de l'ordre de 600 mbar).

Par ailleurs, les moyens échangeurs thermiques 9 consistent avantageusement en des moyens échangeurs thermiques passifs eau-eau, de sorte à assurer des échanges thermiques entre le fluide caloporteur primaire et le fluide de caloporteur secondaire.

Les moyens échangeurs thermiques 9 peuvent être choisis parmi les échangeurs thermiques habituels (échangeurs tubulaires, à plaques, etc.) qui comportent deux circuits fluidiques dans lesquels sont destinés à cheminer les deux fluides pour obtenir un échange thermique entre ces derniers.

En l'espèce, les moyens échangeurs thermiques 9 comprennent un corps creux 91 définissant une chambre 92 contenant deux circuits fluidiques internes 93, 94 dans lesquels sont destinés à cheminer l'un des deux fluides.

Le corps creux 91, et sa chambre 92, présentent par exemple une forme générale cylindrique.

La chambre 92 comporte en particulier un axe longitudinal 92', vertical, et deux extrémités opposées : une extrémité supérieure 921 et une extrémité inférieure 922.

Un premier circuit fluidique interne 93 se présente sous la forme d'une tubulure, ayant par exemple une forme spiralée, qui est implantée dans la chambre 92.

Cette tubulure est réalisée dans un matériau conducteur thermique, pour autoriser les échanges thermiques entre le fluide présent dans ladite tubulure 93 et le fluide remplissant la chambre 92.

Ce premier circuit fluidique interne 93 est muni de deux orifices 931, 932, opposés et superposés, qui débouchent hors du corps creux 91 : un orifice supérieur 931 et un orifice inférieur 932.

Ce premier circuit fluidique interne 93 est ici raccordé au circuit de captage secondaire 6.

De préférence, ce circuit de captage secondaire 6 est raccordé au premier circuit fluidique interne 93 de sorte que :
- la partie amont 6a est connectée avec l'orifice supérieur 931, et
- la partie aval 6b est connectée avec l'orifice inférieur 932.

En d'autres termes, le circuit de captage secondaire 6 est raccordé au premier circuit fluidique interne 93 de sorte que le fluide caloporteur secondaire rentre par l'orifice supérieur 931 et ressorte par l'orifice inférieur 932.

Un second circuit fluidique interne 94 est formé par la chambre 92 qui est munie de deux conduits : un conduit supérieur 941 et un conduit inférieur 942.

Ces conduits 941, 942 sont disposés chacun au niveau de l'une des deux extrémités 921, 922 de la chambre 92.

Par exemple, le premier conduit 941, supérieur, est ménagé au niveau de l'extrémité supérieure 921 de la chambre 92 ; et le second conduit 942, inférieur, est ménagé au niveau de l'extrémité inférieure 922 de la chambre 92.

Chacun de ces deux conduits 941, 942 comportent deux orifices :
- un premier orifice 9411, 9421, externe, débouchant hors du corps creux 91 pour le raccordement au circuit de captage primaire 5, et
- un second orifice 9412, 9422, intérieur, débouchant dans la chambre 92 pour permettre une circulation fluidique dans cette chambre 92 entre les conduits 941, 942.

En l'espèce, le second circuit fluidique interne 94 est ici raccordé au circuit de captage primaire 5. Le fluide caloporteur primaire est ainsi destinée à remplir la chambre 92, et à noyer le premier circuit fluidique interne 93.

De préférence, le second circuit fluidique interne 94 est raccordé au circuit de captage primaire 5 de sorte que la partie amont 5a est connectée avec le conduit inférieur 942 et la partie aval 5b est connectée avec le conduit supérieur 941.

En d'autres termes, le circuit de captage primaire 5 est raccordé au second circuit fluidique interne 94 de sorte que le fluide caloporteur primaire (froid) rentre par le conduit inférieur 942 et ressorte par le conduit supérieur 941 (réchauffé).

De manière alternative, non représenté, un circuit de captage 5, 6 unique pourrait coopérer avec, d'une part, la pompe à chaleur 4 (et en particulier son évaporateur) et, d'autre part, au moins un matelas de confort 7 et lesdits moyens circulateurs 8.

### Modes de réalisation des circuits de captage

Les circuits de captage primaires 5 et secondaires 6 peuvent être agencés à façon, tenant compte en particulier de la configuration des logettes L au sein de l'enceinte E.

De manière générale, tel que représenté très schématiquement sur les figures 2 et 3, le circuit de captage 5, 6 comprend plusieurs circuits de captage secondaires 6 qui sont chacun équipés d'un matelas de confort 7 recouvrant une série (ou travée) de logettes L.

Par exemple, le matelas de confort 7 équipant un circuit de captage secondaire 6 comporte avantageusement de 20 à 70 zones d'accueil 71.

En particulier, l'enceinte E comporte avantageusement au moins deux circuits de captage secondaire 6 équipant chacun au moins une travée T de logettes L.

De préférence encore, un circuit de captage secondaire 6 comporte deux matelas de confort 7 symétriques (comportant chacun plusieurs zones d'accueil 71 en série) dont les cavités étanches 77 sont raccordés fluidiquement de sorte que :
- un premier matelas de confort 7 forme un tronçon aller dudit circuit de captage secondaire 6, et
- un second matelas de confort 7 forme un tronçon retour dudit circuit de captage secondaire 6.

De manière alternative, le circuit de captage secondaire 6 comporte un matelas de confort 7 (comportant plusieurs zones d'accueil 71 en série) dont les cavités étanches 77 sont raccordés fluidiquement de sorte que :
- au moins une cavité étanche 77 forme un tronçon aller dudit circuit de captage secondaire 6, et
- au moins une cavité étanche 77 forme un tronçon retour dudit circuit de captage secondaire 6.

Des modes de réalisation possibles sont illustrés schématiquement sur les figures 2 et 3.

Selon un premier mode de réalisation illustré sur la figure 2, le système 1 comprend un circuit de captage primaire 5 unique qui comporte, en parallèle, au moins deux circuits de captage secondaires 6 (un circuit de captage secondaire 6 par travée T).

Dans ce cas, chaque circuit de captage secondaire 6 coopère avec le circuit de captage primaire 5 par l'intermédiaire des moyens échangeurs thermiques 9.

Et le circuit de captage primaire 5 est agencé de sorte à raccorder en série les différents moyens échangeurs thermiques 9 en présence. Le fluide caloporteur primaire chemine alors successivement au travers de ces moyens échangeurs thermiques 9 successifs.

En l'espèce, le circuit de captage primaire 5 comporte :
- une partie amont 5a, s'étendant depuis la pompe à chaleur 4 jusqu'à des premiers moyens échangeurs thermiques 9,
- une partie aval 5b, s'étendant depuis les derniers moyens échangeurs thermiques 9 jusqu'à la pompe à chaleur 4, et
- des parties intercalaires 5c s'étendant entre deux moyens échangeurs thermiques 9, ici depuis le conduit supérieur 941 de moyens échangeurs thermiques 9 jusqu'au conduit inférieur 942 de moyens échangeurs thermiques 9 en aval.

Selon un second mode de réalisation illustré sur la figure 3 (correspondant encore à la figure 1), le système 1 comprend plusieurs couples parallèles de circuits de captage primaire 5 / secondaire 6.

Dans ce cas, le circuit de captage primaire 5 et son circuit de captage secondaire 6 associé coopèrent par l'intermédiaire des moyens échangeurs thermiques 9 propres.

Au sein de chaque couple, le fluide caloporteur primaire chemine ainsi seulement au travers des moyens échangeurs thermiques 9 de ce couple.

### Moyens de pilotage

Le système 1 comprend encore avantageusement des moyens 10 pour le pilotage de la pompe à chaleur 4 et des moyens circulateurs 8, 51 équipant ledit au moins un circuit de captage 5, 6.

En particulier, les moyens de pilotage 10 consistent en des moyens de pilotage 10 (du type électronique et/ou informatique) adaptés à piloter les moyens circulateurs 8, 51 équipant les circuits de captage secondaires 6 et les circuits de captage primaires 5.

Cette configuration permet une régulation de la circulation des fluides caloporteurs dans chacun des circuits de captage 5, 6 :
- du fluide caloporteur secondaire dans chacun de ces circuits de captage secondaires 6 et
- du fluide caloporteur primaire dans ledit au moins un circuit de captage primaire 5.

### Fonctionnement

Le chauffe-eau thermodynamique 2 est raccordé avec ledit au moins un circuit de captage 5, 6 et le cas échéant ledit circuit de chauffage 41.

Les moyens de pilotage 10 peuvent ensuite piloter automatiquement le fonctionnement du chauffe-eau thermodynamique 2 et dudit au moins un circuit de captage 5, 6, tenant compte avantageusement des besoins en eau chaude.

Pour la fabrication d'eau chaude, les moyens de pilotage 10 génèrent une mise en marche de la pompe à chaleur 4 et dudit au moins un circuit de captage 5, 6 associé, pour capturer l'énergie thermique au sein de l'enceinte d'élevage E (et en particulier l'énergie thermique générée par les animaux sur les matelas de confort 7) et pour la transférer à l'eau à chauffer.

Plus précisément, les fluides caloporteurs sont ici mis en circulation dans les différents circuits de captage 5, 6 :
- le fluide caloporteur secondaire est mis en circulation dans l'un au moins des circuits de captage secondaire 6 (comprenant ledit au moins un matelas de confort 7) sous l'action des moyens de circulation 8 (avec par exemple une pression de 600 mbar), pour capturer l'énergie thermique générée par les animaux, et
- le fluide caloporteur primaire est mis en circulation dans ledit au moins un circuit de captage primaire 5 sous l'action des moyens de circulation 51 (avec par exemple une pression de l'ordre de 2 à 5 bar), pour transférer l'énergie thermique depuis le circuit de captage secondaire 6 jusqu'à la pompe à chaleur 4 (via les moyens échangeurs thermiques 9).

En particulier, sans être limité par une quelconque théorie, l'énergie thermique générée par les animaux est transmise au fluide caloporteur secondaire par un phénomène de conduction thermique.

Pour transférer cette énergie thermique, un échange thermique se produit ici au sein des moyens échangeurs thermiques 9 entre, d'une part, le fluide caloporteur secondaire contenu dans son circuit de captage secondaire 6 et, d'autre part, le fluide caloporteur primaire contenu dans son circuit de captage primaire 5.

Dans le circuit de captage secondaire 6, le fluide caloporteur secondaire chemine ici en parallèle dans les cavités étanches 77 : le courant de fluide caloporteur secondaire se divise afin de traverser simultanément ces cavités étanches 77.

Cette circulation du fluide caloporteur s'effectue également dans un même sens au sein des cavités étanches 77 juxtaposées : le fluide chemine ainsi depuis les orifices débouchants 771 situés au niveau d'un premier bord transversal 74 du matelas de confort 7 (à droite sur la figure 1) jusqu'aux orifices débouchants 771 situés au niveau d'un second bord transversal 74 du matelas de confort 7 (à gauche sur la figure 1).

Lors de cette fabrication d'eau chaude, le fluide caloporteur primaire et le fluide caloporteur secondaire circulent avantageusement en continu, respectivement, dans ledit au moins un circuit de captage primaire 5 et ledit au moins un circuit de captage secondaire 6.

De manière alternative, au sein de chaque circuit de captage secondaire 6, la circulation du fluide caloporteur secondaire peut être arrêtée si sa température est inférieure à une température minimale susceptible de générer un inconfort pour les animaux.

En effet, le fluide caloporteur secondaire est refroidi par son passage au travers des moyens échangeurs thermiques 9 ; inversement, il est réchauffé par son passage au travers des matelas de confort 7. Inversement, le fluide caloporteur primaire est quant à lui réchauffé lors de son passage au travers des moyens échangeurs thermiques 9 puis refroidi lors de son passage au travers de la pompe à chaleur 4.

En particulier, à l'entrée des matelas de confort 7, le fluide caloporteur secondaire est avantageusement à une température comprise entre 5°C et 25°C.

Ce fluide caloporteur secondaire « refroidi » est également intéressant pour le confort thermique des animaux. Les matelas de confort sont refroidis en surface par ce fluide caloporteur secondaire, de sorte à rafraichir l'animal en présence et ainsi à limiter l'augmentation de la température corporelle de ce dernier.

Parallèlement, la pompe à chaleur 4 transfère l'énergie thermique collectée depuis le fluide caloporteur primaire, vers l'eau stockée dans le ballon 3 pour assurer son chauffage.

De manière alternative, la pompe à chaleur 4 transfère l'énergie thermique collectée depuis le fluide caloporteur primaire, vers l'eau stockée dans le circuit de chauffage 41. Ce circuit de chauffage 41 est destiné à assurer le chauffage d'un ballon 3 ou d'un bâtiment.

Lorsque l'eau chaude nécessaire est produite, les moyens de pilotage 10 peuvent générer une mise en arrêt de la pompe à chaleur 4 et dudit au moins un circuit de captage 5, 6 associé.

Le système selon l'invention présente donc des performances énergétiques particulièrement intéressantes (notamment au niveau du COP mesuré sur le chauffe-eau thermodynamique).

Ce système peut également être intéressant pour le confort thermique des animaux soumis à une température ambiante élevée.

## Revendications

1. Système pour la production d'eau chaude dans une enceinte d'élevage des animaux,
lequel système (1) comprend un chauffe-eau thermodynamique (2) comprenant au moins un circuit de captage (5,6) et une pompe à chaleur (4) destinée à chauffer l'eau, ladite pompe à chaleur (4) consiste en une pompe à chaleur eau-eau (4) qui est connectée audit au moins un circuit de captage (5, 6), pour capter l'énergie thermique de l'enceinte et en particulier celle produite par les animaux et dans lequel circule un fluide caloporteur,
lequel au moins un circuit de captage (5, 6) comprend :
(a) au moins un matelas de confort (7) qui comprend au moins une couche élastomère et qui comporte deux faces opposées (75, 76) :
- une face supérieure (75), apte à subir une déformation élastique et comportant au moins une zone d'accueil (71) sur laquelle un animal est destiné à prendre appui, et
- une face inférieure (76), destinée à reposer sur une surface de réception,
lequel au moins un matelas de confort (7) comporte plusieurs cavités étanches (77) destinées à contenir ledit fluide caloporteur,
lesquelles cavités étanches (77) sont sous-jacentes d'au moins une partie de ladite au moins une zone d'accueil (71),
(b) des moyens circulateurs (8, 51), pour générer une circulation dudit fluide caloporteur au sein dudit circuit de captage (5, 6), au travers dudit au moins un matelas de confort (7).

2. Système selon la revendication 1, dans lequel ledit au moins un circuit de captage (5, 6) comporte au moins deux circuits de captage :
- un circuit de captage primaire (5) dans lequel circule un fluide caloporteur primaire, coopérant avec la pompe à chaleur eau-eau (4), et
- un circuit de captage secondaire (6) dans lequel circule un fluide caloporteur secondaire, comprenant ledit au moins un matelas de confort (7) et lesdits moyens circulateurs (8),
lequel circuit de captage primaire (5) et lequel circuit de captage secondaire (6) coopèrent par l'intermédiaire de moyens échangeurs thermiques passifs eau-eau (9), de sorte à assurer des échanges thermiques entre ledit fluide caloporteur primaire et ledit fluide de caloporteur secondaire.

3. Système selon la revendication 2, comprenant :
- au moins un circuit de captage primaire (5) comportant, en parallèle, au moins deux circuits de captage secondaires (6), ou
- au moins deux circuits de captage primaire (5) parallèles, comportant chacun au moins un circuit de captage secondaire (6).

4. Système selon l'une quelconque des revendications 1 à 3, comprenant des moyens (10) pour le pilotage des moyens circulateurs (8, 51) équipant ledit au moins un circuit de captage (5, 6), de manière à réguler la circulation du fluide de caloporteur dans ledit au moins un circuit de captage (5, 6).

5. Système selon l'une quelconque des revendications 1 à 4, dans lequel les cavités étanches (77) dudit au moins un matelas de confort (7) s'étendent parallèlement, ou au moins approximativement parallèlement, les unes par rapport aux autres, et lesdites cavités étanches (77) ont chacune une forme allongée rectiligne.

6. Système selon la revendication 5, dans lequel ledit au moins un matelas de confort (7) comporte deux bords longitudinaux (72), et lesdites cavités étanches (77) s'étendent parallèlement, ou au moins approximativement parallèlement, auxdits bords longitudinaux (72).

7. Système selon l'une quelconque des revendications 1 à 6, dans lequel ledit chauffe-eau thermodynamique (2) comprend un ballon (3) de stockage d'eau chaude, lequel ballon (3) comporte avantageusement une entrée d'eau froide (31) et une sortie d'eau chaude (32).

8. Système selon la revendication 7, comprenant des moyens de nettoyage eau chaude (33) de l'enceinte d'élevage (E), et le ballon de stockage d'eau chaude (3) comporte une sortie d'eau chaude (32) qui est connectée auxdits moyens de nettoyage eau chaude (33) de l'enceinte d'élevage (E).

9. Enceinte d'élevage équipée d'un système (1) selon l'une quelconque des revendications 1 à 8.

10. Enceinte d'élevage selon la revendication 9, comprenant des logettes (L), ledit au moins un matelas de confort (7) recouvre le sol de l'une au moins desdites logettes (L), et ledit au moins un matelas de confort (7) comporte une pluralité de cavités étanches (77) qui s'étendent au sein de l'une au moins desdites logettes (L).

11. Enceinte d'élevage selon la revendication 10, en relation avec la revendication 2, comprenant au moins deux travées (T) de logettes (L), et ladite enceinte (E) comporte au moins deux circuits de captage secondaire (6) équipant chacun au moins une travée (T) de logettes (L).

12. Enceinte d'élevage selon l'une quelconque des revendications 9 à 11, ladite enceinte d'élevage (E) comprenant un local technique et le chauffe-eau thermodynamique (2) est implanté dans ledit local technique.

13. Enceinte d'élevage selon l'une quelconque des revendications 9 à 12, en combinaison avec la revendication 8, ladite enceinte d'élevage (E) comprenant des moyens de nettoyage eau chaude (33) et ledit chauffe-eau thermodynamique (2) comprend un ballon (3) de stockage d'eau chaude, lequel ballon (3) comporte une entrée d'eau froide (31) et une sortie d'eau chaude (32) qui est connectée auxdits moyens de nettoyage eau chaude (33).

## Patentansprüche

1. System zur Erzeugung von Heißwasser in einem Tieraufzuchtgehege,
wobei das System (1) einen thermodynamischen Warmwasserbereiter (2) mit mindestens einem Auffangkreis (5, 6) und einer zum Aufheizen des Wassers bestimmen Wärmepumpe (4) aufweist,
wobei die Wärmepumpe (4) aus einer Wasser-Wasser-Wärmepumpe (4) besteht, die mit dem mindestens einen Auffangkreis (5, 6) verbunden ist, um die Wärmeenergie des Geheges und insbesondere die von den Tieren produzierte aufzufangen, und in dem ein Wärmeübertragungsmittel fließt,
wobei der mindestens eine Auffangkreis (5, 6)
(a) mindestens eine Komfortmatratze (7), die mindestens eine Elastomerschicht aufweist und die zwei entgegengesetzte Seiten (75, 76) aufweist:
- eine Oberseite (75), die geeignet ist, eine elastische Verformung zu vertragen, und die mindestens eine Aufnahmezone (71) aufweist, auf der sich ein Tier abstützen soll, und
- eine Unterseite (76), die dazu bestimmt ist, auf einer Aufnahmeoberfläche aufzuliegen,
wobei die mindestens eine Komfortmatratze (7) mehrere dichte Hohlräume (77) aufweist, die dazu bestimmt sind, das Wärmeübertragungsmittel zu enthalten,
wobei die dichten Hohlräume (77) unter mindestens einem Teil der mindestens einen Aufnahmezone (71) angeordnet sind,
(b) Umwälzmittel (8, 51) zum Erzeugen eines Kreislaufs des Wärmeübertragungsmittels im Auffangkreis (5, 6) durch die mindestens eine Komfortmatratze (7)
aufweist.

2. System gemäß Anspruch 1, wobei der mindestens eine Auffangkreis (5, 6) mindestens zwei Auffangkreise aufweist:
- einen primären Auffangkreis (5), in dem ein primäres Wärmeübertragungsmittel fließt, das mit der Wasser-Wasser-Wärmepumpe (4) zusammenwirkt, und
- einen sekundären Auffangkreis (6), in dem ein sekundäres Wärmeübertragungsmittel fließt und der die mindestens eine Komfortmatratze (7) und die Umwälzmittel (8) aufweist,
wobei der primäre Auffangkreis (5) und der sekundäre Auffangkreis (6) über passive Wärmeaustauschmittel Wasser-Wasser (9) zusammenwirken, um Wärmeaustauschvorgänge zwischen dem primären Wärmeübertragungsmittel und dem sekundären Wärmeüberragungsmittel sicherzustellen.

3. System gemäß Anspruch 2 mit
- mindestens einem primären Auffangkreis (5), der mindestens zwei parallele sekundäre Auffangkreise (6) aufweist, oder
- mindestens zwei parallelen primären Auffangkreisen (5), von denen jeder mindestens einen sekundären Auffangkreis (6) aufweist.

4. System gemäß einem der Ansprüche 1 bis 3 mit Mitteln (10) zum Steuern der Umwälzmittel (8, 51), mit denen der mindestens eine Auffangkreis (5, 6) ausgestattet ist, um den Durchfluß des Wärmeübertragungsmittels in dem mindestens einen Auffangkreis (5, 6) zu regeln.

5. System gemäß einem der Ansprüche 1 bis 4, wobei sich die dichten Hohlräume (77) der mindestens einen Komfortmatratze (7) parallel oder mindestens näherungsweise parallel zueinander erstrecken und wobei die dichten Hohlräume (77) jeweils eine geradlinige langgestreckte Form aufweisen.

6. System gemäß Anspruch 5, wobei die mindestens eine Komfortmatratze (7) zwei Längsränder (72) aufweist und sich die dichten Hohlräume (77) parallel oder mindestens näherungsweise parallel zu den Längsrändern (72) erstrecken.

7. System gemäß einem der Ansprüche 1 bis 6, wobei der thermodynamische Warmwasserbereiter (2) einen Warmwasserspeicher (3) aufweist, wobei der Warmwasserspeicher (3) vorteilhafterweise einen Kaltwasserzulauf (31) und einen Heißwasserablauf (32) aufweist.

8. System gemäß Anspruch 7 mit Mitteln (33) zum Reinigen des Tieraufzuchtgeheges (E) mit Heißwasser, wobei der Warmwasserspeicher (3) einen Heißwasserablauf (32) aufweist, der mit den Mitteln (33) zum Reinigen des Tieraufzuchtgeheges (E) mit Heißwasser verbunden ist.

9. Aufzuchtgehege mit einem System (1) gemäß einem der Ansprüche 1 bis 8.

10. Aufzuchtgehege gemäß Anspruch 9 mit Liegeboxen (L),
wobei die mindestens eine Komfortmatratze (7) den Boden von mindestens einer der Liegeboxen (L) bedeckt
und wobei die mindestens eine Komfortmatratze (7) eine Anzahl dichter Hohlräume (77) aufweist, die sich in mindestens einer der Liegeboxen (L) erstrecken.

11. Aufzuchtgehege gemäß Anspruch 10 in Kombination mit Anspruch 2 mit mindestens zwei Anordnungen (T) von Liegeboxen (L), wobei das Gehege mindestens zwei sekundäre Auffangkreise (6) aufweist, die jeweils mindestens eine Anordnung (T) von Liegeboxen (L) ausstatten.

12. Aufzuchtgehege gemäß einem der Ansprüche 9 bis 11, wobei das Aufzuchtgehege (E) einen Technikraum aufweist und der thermodynamische Warmwasserbereiter (2) in dem Technikraum untergebracht ist.

13. Aufzuchtgehege gemäß einem der Ansprüche 9 bis 12 in Kombination mit Anspruch 8, wobei das Aufzuchtgehege (E) Mittel zum Reinigen mit Heißwasser aufweist, wobei der thermodynamische Warmwasserbereiter (2) einen Warmwasserspeicher (3) aufweist, wobei der Speicher (3) einen Kaltwasserzulauf (31) und einen mit den Mitteln (33) zum Reinigen mit Heißwasser verbundenen Heißwasserablauf (32) aufweist.

## Claims

1. A system for producing hot water in a livestock enclosure,
wherein said system (1) comprises a thermodynamic water heater (2) comprising at least one collection circuit (5, 6) and a heat pump (4) intended to heat the water,
said heat pump (4) consists of a water-to-water heat pump (4) that is connected to said at least one collection circuit (5, 6) for collecting the heat energy and within which circulates a heat-transfer fluid,
wherein at least one collection circuit (5, 6), comprises:
(a) at least one comfort mat (7) that comprises at least one elastomeric layer and that has two opposite faces (75, 76):
- an upper face (75), adapted to undergo an elastic deformation and including at least one accommodation area (71) on which an animal is intended to rest, and
- a lower face (76), intended to rest on a receiving surface,
wherein said at least one comfort mat (7) includes several sealed cavities (77) intended to contain said heat-transfer fluid,
wherein said sealed cavities (77) lie underneath at least part of said at least one accommodation area (71),
(b) circulating means (8, 51), for generating a circulation of said heat-transfer fluid within said collection circuit (5, 6), including through said at least one comfort mat (7).

2. The system according to claim 1, wherein said at least one collection circuit (5, 6) includes at least two collection circuits:
- a primary collection circuit (5) in which circulates a primary heat-transfer fluid, cooperating with the heat pump (4), and
- a secondary collection circuit (6) in which circulates a secondary heat-transfer fluid, comprising said at least one comfort mat (7) and said circulator means (8),
wherein said primary collection circuit (5) and said secondary collection circuit (6) cooperate through passive water-to-water heat exchanger means (9), so as to ensure heat exchanges between said primary heat-transfer fluid and said secondary heat-transfer fluid.

3. The system according to claim 2, including:
- at least one primary collection circuit (5) including, in parallel, at least two secondary collection circuits (6), or
- at least two parallel primary collection circuits (5), each including at least one secondary collection circuit (6).

4. The system according to any one of claims 1 to 3, comprising means (10) for controlling the circulator means (8, 51) equipping said at least one collection circuit (5, 6), so as to regulate the circulation of the heat-transfer fluid in said at least one collection circuit (5, 6).

5. The system according to any one of claims 1 to 4, wherein the sealed cavities (77) of said at least one comfort mat (7) extend parallel, or at least approximately parallel, to each other, and said sealed cavities (77) each have a rectilinear elongated shape.

6. The system according to claim 5, wherein said at least one comfort mat (7) includes two longitudinal edges (72),
and said sealed cavities (77) extend parallel, or at least approximately parallel, to said longitudinal edges (72).

7. The system according to any one of claims 1 to 6, wherein said thermodynamic water heater (2) comprises a hot water storage tank (3), wherein said tank (3) advantageously includes a cold water inlet (31) and a hot water outlet (32).

8. The system according to claim 7, comprising hot water cleaning means (33) of the livestock enclosure (E), and the hot water storage tank (3) includes a hot water outlet (32) that is connected to said hot water cleaning means (33) of the livestock enclosure (E).

9. A livestock enclosure equipped with a system (1) according to any one of claims 1 to 8.

10. The livestock enclosure according to claim 9, comprising stalls (L),
said at least one comfort mat (7) covers the ground of one at least of said stalls (L),
and said at least one comfort mat (7) includes a plurality of sealed cavities (77) that extend within one at least of said stalls (L).

11. The livestock enclosure according to claim 10, in relation with claim 2, comprising at least two rows (T) of stalls (L),
and said enclosure (E) includes at least two secondary collection circuits (6) each equipping at least one row (T) of stalls (L).

12. The livestock enclosure according to any one of claims 9 to 11, said livestock enclosure (E) comprising a machine room and in that the thermodynamic water heater (2) is implanted in said machine room.

13. The livestock enclosure according to any one of claims 9 to 12, in combination with claim 8, said livestock enclosure (E) comprising hot water cleaning means (33) and said thermodynamic water heater (2) comprises a hot water storage tank (3), wherein said hot water cleaning means (3) includes a hot water outlet (32) that is connected to said hot water cleaning means (33).
